# EUROPÄISCHE PATENTANMELDUNG

(11) **EP 0 999 382 A2**
(43) Veröffentlichungstag der Anmeldung: **10.05.2000**
(21) Anmeldenummer: 99203612.9
(22) Anmeldetag: 04.11.1999
(51) Int. Cl.: F16H 48/10

(54) **Differentialgetriebe für ein Tretauto oder Go-Kart und dergleichen mehr**

(30) Priorität: 04.11.1998 NL 1010470
(71) Anmelder: Van Ee, Teunis Karel, 3771 MB Barneveld (NL)
(72) Erfinder: Van Ee, Teunis Karel, 3771 MB Barneveld (NL)
(74) Vertreter: Ferguson, Alexander

(57) **Zusammenfassung**

Die Erfindung bezieht sich auf ein Tretauto oder (Kinder)Go-Kart (300), oder derartiges kleines Fahrzeug, mit einem Differentialgetriebe (1), umfassend eine Anzahl mit einander im Zahneingriff befindliche Zahnachsen (11), die parallel zu einander aufgestellt sind und in zwei Gruppen angeordnet sind, wobei die beiden Gruppen sich im treibenden Angriff mit jeweiligen, zu zwei entgegengestellten Seiten reichenden ausgehenden Achsen, insbesondere Antriebsachsen, befinden, wobei die Zahnachsen in einem Halter gehalten sind, der drehfest mit einem Antriebsteil des Fahrzeugs, wie einem Kettenrad, verbunden ist, wobei die Zahnachsen an ihren Enden frei drehbar, vorzugsweise mittels einer Stiftverbindung an dem Halter gelagert sind.

## Beschreibung

Die Erfindung bezieht sich auf ein Differentialgetriebe für ein Tretauto oder Go-Kart und dergleichen mehr.

Differentialgetrieben für Autos und derartige Fahrzeuge sind bekannt. Es gibt zwei übliche Ausführungen. In der ältesten Variante befinden sich in einem Gehäuse zwei Sätze Kegelräder, die auf einander eingreifen. Der eine Satz ist mit den Radachsen gekoppelt, und der andere Satz ist frei drehbar. Das Gehäuse selbst wird durch die Kardanwelle des Autos in Drehung angetrieben. Wenn die beiden Räder dieselbe Geschwindigkeit haben, rotieren die frei drehbaren Kegelräder nicht und wird die Drehung des Gehäuses mittels der nicht-drehenden Kegelräder direkt an die Radachsen durchgegeben. Wenn man eine Kurve und dergleichen mehr nimmt, haben die Räder und also die angehörigen Kegelräder eine unterschiedliche Geschwindigkeit; der Unterschied in Geschwindigkeit wird durch Drehung der frei drehbaren Kegelräder aufgenommen. In einer anderen Variante des Differentialgetriebes wird ein Planetenradgetriebe benutzt, wobei die Planetenräder im Grunde dieselbe Funktion als das frei drehbare Kegelrad in der ersten Variante ausüben.

Ein Nachteil der bekannten Typen Differentialgetriebe ist daß sie für Tretautos nicht gut brauchbar sind, weil sie ziemlich groß und teuer sind, und daneben schwierig zu montieren sind. Bei Tretautos und dergleichen mehr wird darum bisher nur ein Rad angetrieben.

Es ist eine Aufgabe der Erfindung ein Differentialgetriebe für ein relativ kleines Fahrzeug wie ein (Kinder) Go-Kart und dergleichen mehr zu verschaffen, das kompakt und stark genug ist.

Es ist eine andere Aufgabe der Erfindung ein Differentialgetriebe dafür zu verschaffen das leicht zusammenzusetzen und leicht montierbar ist.

Es ist noch eine andere Aufgabe der Erfindung ein Differentialgetriebe dafür zu verschaffen, das relativ kostengünstig herzustellen ist.

Es ist noch eine andere Aufgabe der Erfindung ein Differentialgetriebe zu verschaffen, das für Schmutz und dergleichen mehr aus der Umgebung gut abzuschließen ist.

Eine oder mehrere dieser Aufgaben werden gemäß der Erfindung mit einem kleinen Fahrzeug wie einem Tretauto oder einem (Kinder)Go-Kart mit einem Differentialgetriebe erreicht, umfassend eine Anzahl mit einander im Zahneingriff befindliche Zahnachsen, die parallel zu einander aufgestellt sind und in zwei Gruppen angeordnet sind, wobei die beiden Gruppen sich im treibenden Angriff mit jeweiligen, zu zwei entgegengestellten Seiten reichenden ausgehenden Achsen, insbesondere Antriebsachsen, befinden, wobei die Zahnachsen in einem Halter gehalten sind, der drehfest mit einem Antriebsteil des Fahrzeugs, wie einem Kettenrad, verbunden ist, wobei die Zahnachsen an ihren Enden frei drehbar, vorzugsweise mittels einer Stiftverbindung an dem Halter gelagert sind. Die Drehung des Antriebsteils wird hierbei auf den Halter, und durch den Halter auf die Enden der Zahnachsen übertragen, die dadurch mit ihren Zähnen nur auf Nachbarzahnachsen und die Antriebsachsen eingreifen brauchen. Die Lagerung der Zahnachsenenden bringt mit sich daß zugleich ein axial Einschlußmittel für die Zahnachsen verschafft ist. Die Zahnachsen bleiben während Benutzung gut parallel zu einander und werden nicht festlaufen.

Gemäß einer Vorzugsausführung umfaßt das Differentialgetriebe eine gerade Anzahl Zahnachsen und ist eine erste ausgehende Achse mit einer ersten Hälfte der auf einander angreifenden Achsen gekoppelt und ist eine zweite ausgehende Achse mit einer zweiten Hälfte der auf einander angreifenden Achsen gekoppelt.

Die ausgehenden Achsen sind also zwar auf einander angeschlossen, aber sie können hinsichtlich einander drehen. Wenn die beiden ausgehenden Achsen gleich schnell rotieren, wird das Achsensystem mit Hilfe von dem Halter rotiert, und stehen die auf einander angreifenden Achsen hinsichtlich einander still. Wenn die beiden ausgehenden Achsen nicht gleich schnell rotieren, drehen die auf einander eingreifenden Achsen die mit der ersten ausgehenden Achse gekoppelt sind hinsichtlich der Achsen die mit der zweiten ausgehenden Achse gekoppelt sind.

Vorzugsweise sind die ausgehenden Achsen hierbei abwechselnd mit den auf einander angreifenden Zahnachsen gekoppelt. Auf diese Weise können die Zahnachsen im Durchschnitt eine geschlossene Strecke bilden, wobei jede Zahnachse auf seine beiden Nachbarzahnachsen angreift.

Vorzugsweise ist der Halter mit Endplatten versehen, die mit ersten Stiftverbindungsmitteln, für Zusammenarbeit mit komplementären, zweiten Stiftverbindungsmitteln an den Zahnachsenenden versehen sind. Durch die Endplatten wird eine stabile Lagerfläche verschafft, die zugleich die da gelagerten Zahnachsen axial gleich hält.

Die ersten Stiftverbindungsmittel sind vorzugsweise als Stiftchen gebildet, die leicht zu formen sind. Die Enden der Zahnachsen können einfach mit passenden Lagerlöchern versehen werden.

In einer weiteren Entwicklung umfaßt der Halter einen Ring, der mit Mitteln für drehfeste Verbindung mit dem Antriebsteil versehen ist. Der Ring kann die Zahnachsen auf Abstand umgeben, um Energieverlust und Verschleiß durch Reibung zu verhüten.

Es wird dabei bevorzugt, daß der Ring drehfest mit den Endplatten verbunden ist. Dies kann auf einfache Weise erreicht werden, wenn die Zahnachsen der einen Gruppe hinsichtlich der zweiten Gruppe axial verschoben liegen und der Halter an Ort und Stelle des dadurch in axialer Richtung entstandenen Raums einen Verbindungssteg zwischen der an dieser Seite gelegenen Endplatte und dem Ring bildet. Also wird der Raum der nicht für Zahnachsen benutzt werden braucht für eine steife Verbindung zu den Endplatten benutzt, so daß eine zuverlässige Übertragung der Drehkräfte des Ringes zu den Endplatten und damit von den dort gelagerten Enden der Zahnachsen erhalten wird.

Vorzugsweise bilden die Verbindungsstege an ihrem von den betreffenden Endplatten abgekehrten Ende eine Fläche die mit ersten Stiftverbindungsmitteln für Zusammenarbeit mit komplementären, zweiten Stiftverbindungsmitteln an den Zahnachsenenden versehen ist. Diese Flächen können auch eine axiale Einschließung für die Zahnachsen in diejenige Richtung bilden.

Das Zusammenbauen des Differentialgetriebes wird vereinfacht, wenn der Halter aus zwei Teilen aufgebaut ist, die mit einander verbunden sind, vorzugsweise mittels einer lösbaren Verbindung, wie zum Beispiel einer Schnappverbindung. Die Zahnachsen werden bei Zusammenbau einfach in das eine Halterteil gesetzt, wonach das andere Halterteil darauf gesetzt wird, um die Zahnachsen in beide axiale Richtungen einzuschließen. Vorzugsweise ist der Halter an Ort und Stelle des Ringes in zwei identischen Hälften geteilt, so daß für den Halter nur ein einziges Formteil erforderlich ist.

Aus einem anderen Aspekt verschafft die Erfindung also an sich ein Halter der angegebenen Art der ein Hauptunterteil eines Differentialgetriebes zwischen zwei nach beiden Seiten reichenden ausgehenden Achsen bildet, wobei der Halter als eine Kassette mit den Zahnachsen darin eingeschlossen gebildet ist, wobei die Zahnachsen abwechselnd mit ihren Zähnen für Angriff auf eine betreffende ausgehende Achse frei liegen.

Montageleichtigkeit wird gefördert wenn der Halter in einem Rohrstück aufgenommen ist, worin auch ein Lager für zumindest eine der Antriebsachsen vorgesehen ist. Ein derartiges Rohrstück bietet dann einen Schutz und eine Stütze für das Differentialgetriebe, aber auch für einen Antriebsachselager, wobei das Rohr durch seine Steifheit ausrichtend wirksam ist. Es wird dabei bevorzugt, dadurch daß das Effekt verstärkt wird, wenn das Rohrstück von zwei axial auf Abstand von einander gelegenen Lagern für die Antriebsachse versehen ist. Vorzugsweise ist das Rohrstück mit Lagern für beide Antriebsachsen versehen.

Wenn die Zahnachsen mit ihren Zahnangriffsenden konisch gebildet sind, ist es möglich um durch axiale Versetzung der Antriebsachsen den Ineinandergreifungsmaß zu verstellen, was nach langjähriger, intensiver Benutzung eines Tretautos vorteilhaft sein kann.

Aus einem weiteren Aspekt verschafft die Erfindung ein Differentialgetriebe für ein Tretauto, umfassend ein System von für Drehung auf einander angreifenden Zahnachsen, die alle parallel zu einander verlaufen, welches Zahnachsensystem mit Hilfe eines das Achsensystem umhüllenden Halters, der dazu auf mindestens eine Zahnachse angreift, drehbar ist.

Vorzugsweise sind zwei ausgehende Achsen mit dem System auf einander angreifende Zahnachsen gekoppelt, welche ausgehende Achsen parallel zu den auf einander angreifenden Zahnachsen laufen. Die Gesamtheit von Differentialgetriebe und ausgehenden Achsen liegt also auf einer Linie und bildet eine kompakte Gesamtkonstruktion. Diese ausgehenden Achsen sind mit den angetriebenen Rädern des Tretautos, normalerweise den Hinterrädern, verbunden.

In einer möglichen Ausführung hat jede Zahnachse bei einem Ende ein verjüngtes oder glattes Teil, das abwechselnd nach links und nach rechts gerichtet ist.

Hierdurch können die nicht-verjüngten Enden leicht direkt oder indirekt mit der betreffenden ausgehenden Achse in Angriff gebracht werden. Hierdurch bleiben die Achsen während Betrieb gut parallel zu einander und werden sie nicht festlaufen.

Vorzugsweise ist hierbei der umhüllende Halter bei jeder Zahnachse mit Zurückhaltmitteln für die Zahnachse an der Seite wo die Zahnachse nicht hervorsteht, versehen. Durch die Zurückhaltmittel wird verhütet, daß die betreffende Zahnachse mit der ausgehenden Zahnachse, womit sie nicht gekoppelt werden muß, in Berührung kommt.

Gemäß einer Vorzugsausführung ist jede ausgehende Achse drehfest mit einer hohlen Buchse verbunden, die mit ihrer Innenseite für Drehung auf ein oder mehrere nicht-verjüngte oder nicht-glatte Enden der auf einander angreifenden Zahnachsen angreift. Die Drehung des Achsensystems wird hierdurch auf die beiden hohlen Buchsen übertragen, und damit auf die ausgehenden Achsen, während die hohlen Buchsen, und damit die ausgehenden Achsen, wohl hinsichtlich einander drehen können.

Gemäß einer anderen Ausführung steckt jede ausgehende Achse mit einem Ende zwischen eine der Hälften der angreifenden Zahnachsen und greift dieses Ende für Drehung auf ein oder mehrere nicht-verjüngte oder hervorstehende Enden der auf einander angreifenden Zahnachsen an.

Vorzugsweise sind die Herzlinien der auf einander angreifenden Zahnachsen auf einem Kreis gelegen. Hierdurch ist das Differentialgetriebe einfach herzustellen und zu montieren.

Gemäß einer Vorzugsausführung sind die auf einander angreifenden Zahnachsen mit einer Längsverzahnung versehen. Hierdurch greifen die Zahnachsen ohne schlupfen auf einander an.

Vorzugsweise ist die hohle Buchse an jeder ausgehenden Achse mit Innenverzahnung versehen. Hiermit ist es möglich der radiale Umfang des Differentialgetriebes klein zu halten. Das System der mit Längsverzahnung versehenen Zahnachsen ist hierdurch ohne Rutschen mit den beiden hohlen Buchsen gekoppelt, und bei einer verschiedenen Drehschnellheit von den beiden ausgehenden Achsen drehen die mit Längsverzahnung versehenen Zahnachsen in den hohlen Buchsen und hinsichtlich einander.

Gemäß einer anderen Ausführung ist statt der hohlen Buchse mit Innenverzahnung das Ende der ausgehenden Achse mit einer Außenlängsverzahnung, die zwischen die Zahnachsen greift, versehen. Diese Verzahnung ist leichter anzubringen, aber das Material muß stärker sein, weil minder Zähne im Eingriff sind.

Gemäß einer alternativen Ausführung ist der Halter als ringförmiges, umhüllendes Organ mit einer vorzugsweise glatten Innenkontur gebildet, die im wesentlichen bei dem Umhüllenden der ja oder nicht mit einer Verzahnung versehenen auf einander angreifenden Zahnachsen anschließt. Hierdurch wird das Antriebsmoment des umhüllenden ringförmigen Organs über alle Zahnachsen verteilt übertragen. Bei Benutzung von gezahnten Achsen ist die Scherspannung der Zähne auch bei einem kleinen Diameter der Zahnachsen dann nicht groß. Auch finden die drehenden gezahnten Zahnachsen eine gute Führung um frei hinsichtlich des umhüllenden Organs zu drehen, wenn die Drehschnellheit der ausgehenden Achsen unterschiedlich ist.

Vorzugsweise besteht das System von auf einander angreifenden Achsen aus sechs Zahnachsen und greift jede Zahnachse auf zwei andere Zahnachsen an, wodurch eine gute Kraftübertragung des Halters oder Umhüllenden auf das Zahnachsensystem stattfindet, und jede ausgehende Achse durch drei Zahnachsen des Systems angetrieben wird, was eine gute Einschließung der hohlen Buchse oder des umschlossenen Endes der ausgehenden Achse verschafft, während das Differentialgetriebe so kompakt wie möglich gehalten wird. Vorzugsweise sind die Zahnachsen mit einer Längsverzahnung versehen und hat jede Zahnachse eine Anzahl Zähne, die durch sechs teilbar ist. Hiermit wird ein gutes Übertragungsverhältnis zwischen der Anzahl Zähne auf den Achsen und der Anzahl Zähne in der hohlen Buchse erhalten.

Vorzugsweise hat jede Zahnachse zwölf Zähne und hat die hohle Buchse mit Innenverzahnung sechsunddreißig Zähne.

Gemäß einer weiteren alternativen Ausführung ist das umhüllende Organ oder der Halter hauptsächlich massiv und mit zumindest einem Schlitz für das Aufnehmen von zumindest zwei auf einander angreifenden Zahnachsen versehen, wobei die Kontur des Schlitzes hauptsächlich bei dem Umhüllenden der ja oder nicht mit Verzahnung versehenen zumindest zwei Zahnachsen anschließt. Der Schlitz sorgt dafür, daß die Zahnachsen immer parallel zu einander und zu den ausgehenden Achsen verlaufen. Eine Lagerung der Zahnachsen braucht hierdurch unter Umständen nicht notwendig zu sein.

Vorzugsweise ist der umhüllende Halter dabei mit zwei Schlitzen versehen und enthält jeder Schlitz zwei Zahnachsen. Hierdurch ist eine symmetrische Belastung des umhüllenden Halters und der ausgehenden Achsen möglich.

Gemäß einer Vorzugsausführung ist der umhüllende Halter geteilt, um die zwei Schlitze mit Achsen hinsichtlich einander verstellen zu können. Nach Verschleiß der Achsen oder ihrer Verzahnung sind die Zahnachsen dann aufs neue einzustellen.

Vorzugsweise sind die ausgehenden Achsen in Lagern gelagert, wovon der Außendiameter gleich ist an dem Außendiameter des umhüllenden Halters, und sind die Lager und der umhüllende Lager in einem Rohr aufgenommen. Hierdurch ist das Differentialgetriebe leicht zusammenzusetzen und gut für Schmutz und dergleichen mehr aus der Umgebung geschützt.

Vorzugsweise ist hierbei ein Kettenrad um das Rohr befestigt, so daß der Kettenantrieb des Tretautos direkt auf das Differentialgetriebe übertragen wird.

Vorzugsweise ist das Differentialgetriebe symmetrisch hinsichtlich eines Querdurchschnittes durch das System aufeinander angreifende Achsen, wodurch das Differentialgetriebe so einfach wie möglich bleibt.

Das Differentialgetriebe gemäß der Erfindung ist außerordentlich geeignet um in Fahrzeuge, worin wenig Raum verfügbar ist und/oder wo hohe Sicherheitsnormen gelten, wie insbesondere Kinder Go-Karts, aber zum Beispiel auch Grasmäher, gesetzt zu werden.

Die Erfindung wird an Hand einer Anzahl Ausführungsbeispiele, mit Bezug auf die hinzugefügten Zeichnungen, erläutert werden.

Figur 1 zeigt ein Go-Kart für Kinder, der mit einem Differentialgetriebe gemäß der Erfindung versehen ist.

Figur 2 zeigt eine Kassette für eine erste Ausführung des Differentialgetriebes gemäß der Erfindung, in demontiertem Zustand.

Figuren 3A und 3B zeigen beziehungsweise eine Endansicht und eine Seitenansicht der Kassette von Figur 1.

Figur 4 zeigt das Differentialgetriebe gemäß Figur 1 in Seitenansicht, in einem Rohr mit Kettenrad im Durchschnitt aufgenommen.

Figur 5 zeigt ein anderes Ausführungsbeispiel eines Differentialgetriebes gemäß der Erfindung, ohne Halter oder umhüllendes Organ, in perspektivischer Ansicht.

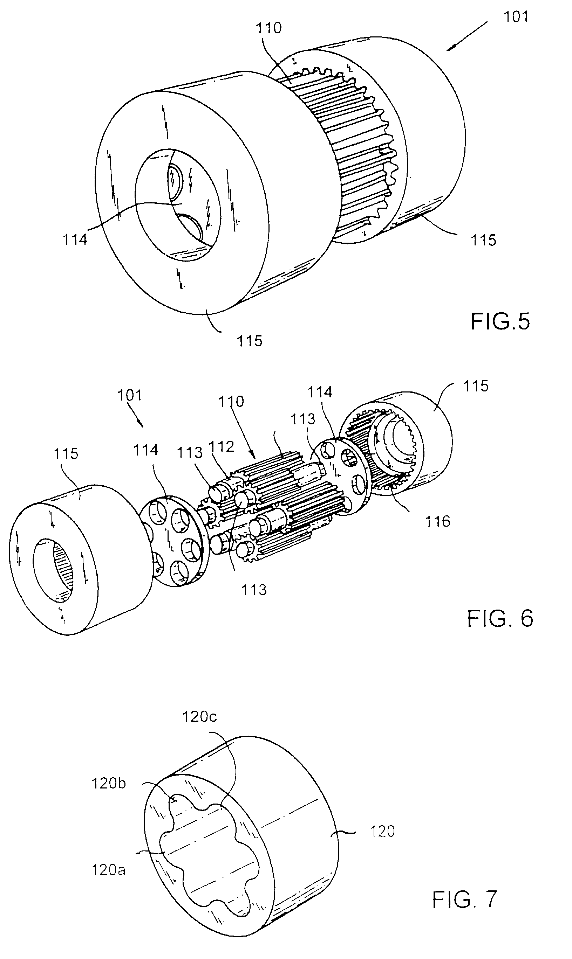

Figur 5 zeigt das Differentialgetriebe gemäß Figur 5 in auseinandergenommenem Zustand.

Figur 7 zeigt ein umhüllendes Organ für das Differentialgetriebe von Figur 5 in perspektivischer Ansicht.

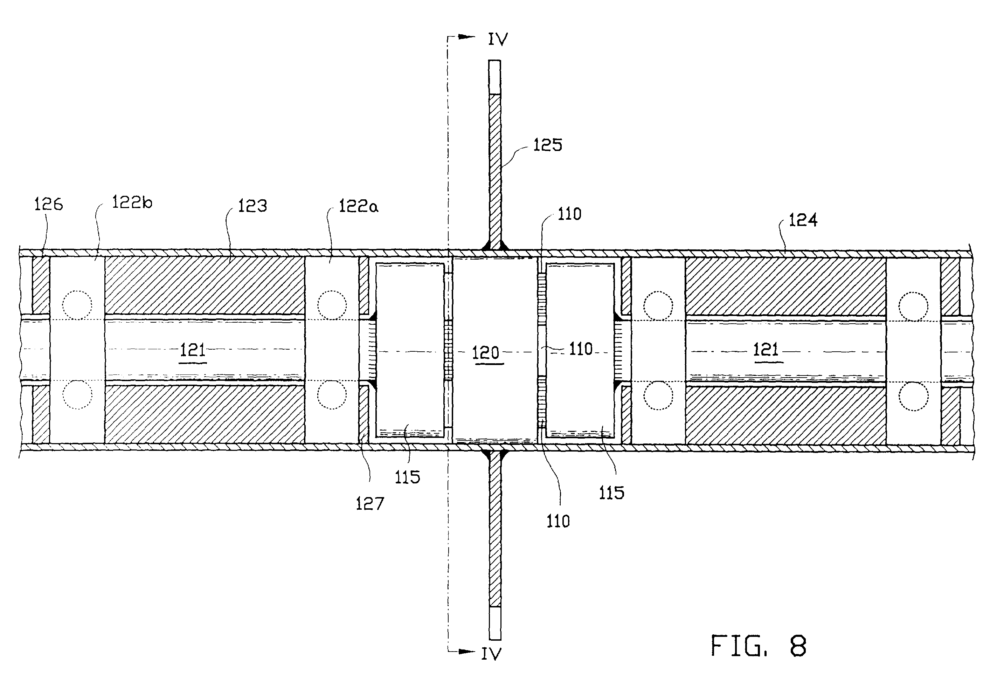

Figur 8 zeigt das Differentialgetriebe gemäß Figur 5 in Seitenansicht, in einem Rohr mit Kettenrad im Durchschnitt aufgenommen.

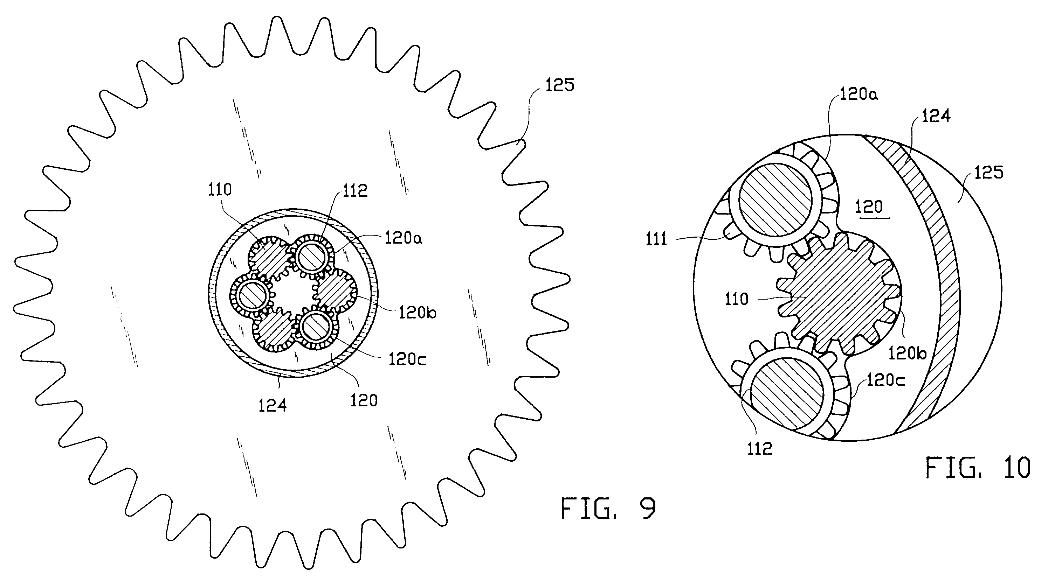

Figur 9 zeigt einen Durchschnitt des Differentialgetriebes aus Figur 8.

Figur 10 zeigt ein Detail von Figur 9 auf größerem Maßstab.

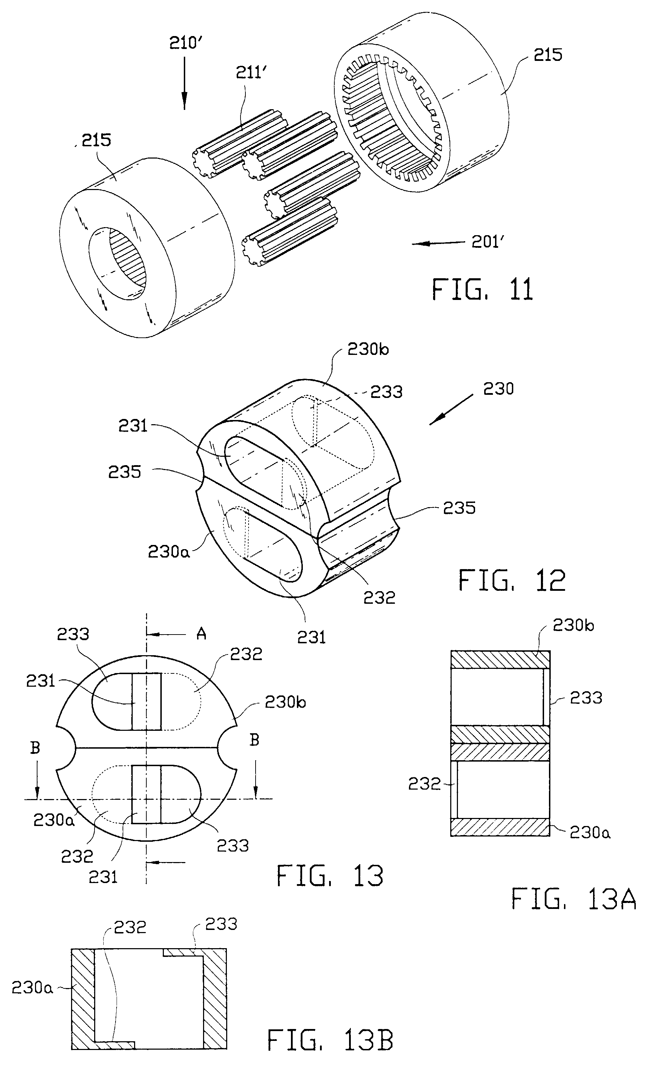

Figur 11 zeigt noch ein anderes Ausführungsbeispiel eines Differentialgetriebes gemäß der Erfindung, ohne umhüllenden Halter, in auseinandergenommenem Zustand, in perspektivischer Ansicht.

Figur 12 zeigt den umhüllenden Halter für das Differentialgetriebe von Figur 11 in perspektivischer Ansicht.

Die Figuren 13, 13A und 13B zeigen den umhüllenden Halter von Figur 11 in Vorderansicht und zwei Durchschnitte.

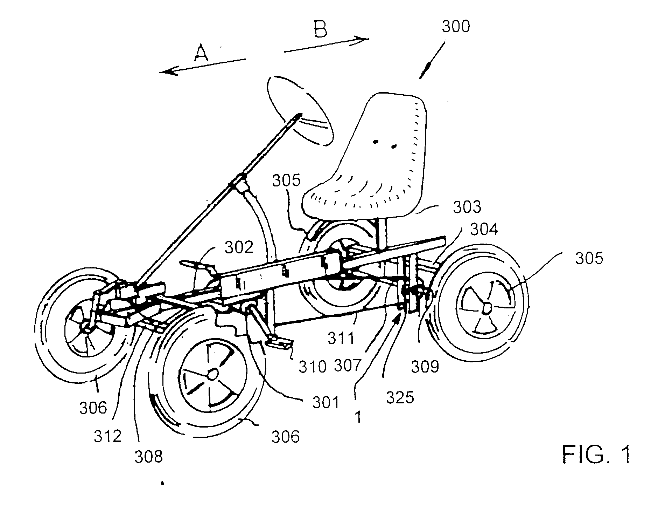

In Figur 1 ist das Tretauto oder der Go-Kart 300 - ohne Motor - wiedergegeben, umfassend ein Chassis mit Hauptbalken 302, mit darauf befestigt der Sitz 303, mit einem Hinterbalken 304 und Hinterrädern 305, die auf den Enden der Hinter- oder Antriebsachsen 307 befestigt sind, um dadurch angetrieben zu werden. Die Antriebsachsen 307 selbst werden via ein Differentialgetriebe 1, 100, 200 gemäß der Erfindung mit Hilfe von einem darauf drehfest angeordneten Zahnrad 325 angetrieben, das durch eine Kette 311 angegriffen wird, die via zahnradförmiges Vorderblatt 301 und damit für Drehung verbundene Pedale 310 angetrieben werden kann. Voran ist das Tretauto 300 mit Vorderrädern 306 versehen, die frei drehbar auf den Enden eines Vorderbalkens 312 eines Chassis und an den Achsschenkelenden einer Spurstange 308 die mit Hilfe von Lenkstange und Lenkrad hin und wieder bewogen werden kann, angeordnet sind.

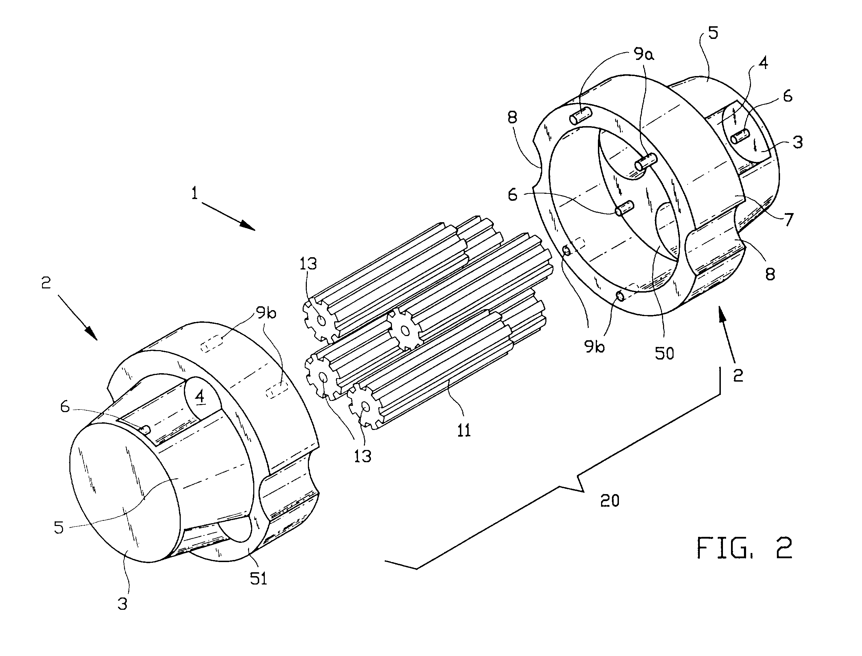

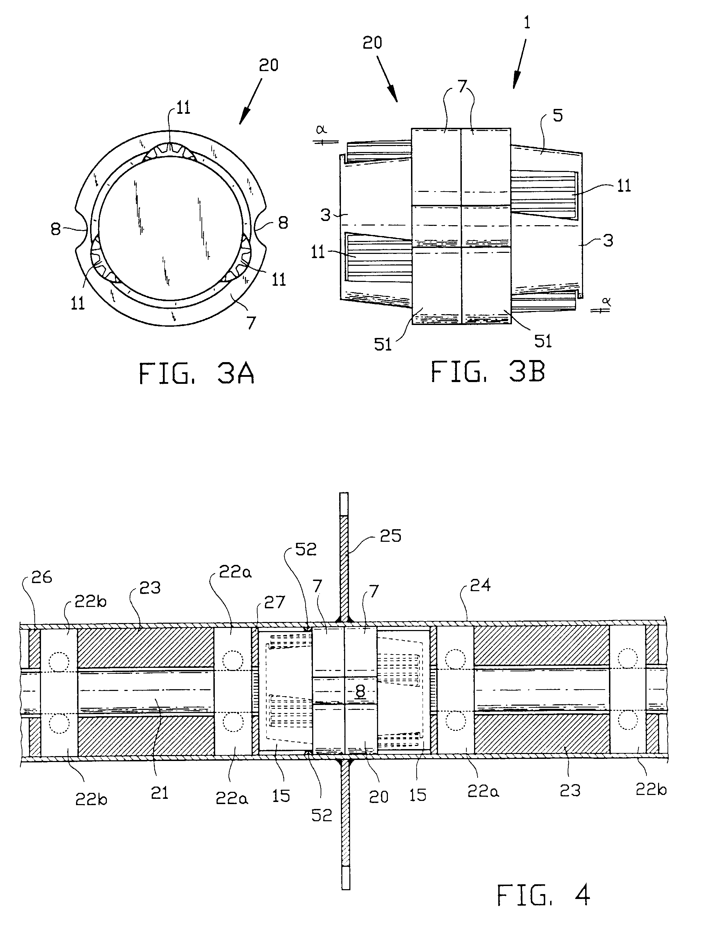

Die erste Ausführung des Differentialgetriebes gemäß der Erfindung ist mit 1 in Figur 1 bis einschließlich 3 wiedergegeben. In den Figuren 2, 3A und 3B ist Differentialgetriebe 1 wiedergegeben, zumindest das wichtigste Unterteil davon gemäß der Erfindung, in der Form einer leicht zu stellenden Kassette 20. Die Kassette 20 umfaßt zwei identische Kunststoffkassettehälften 2, die jede mit einer Endplatte 3 und einem Ring 7 versehen sind, die mittels mitgeformter Stege 5 mit einander verbunden sind. Die Stege 5 haben eine Außenoberfläche die einigermaßen konisch von dem Ring 7 zu der Endplatte 3 abläuft, und bestimmen zwischen sich die Aufnahmeräume 4 für Zahnachsen 11.

An der zu den Räumen 4 zugekehrten Seite ist die Endplatte 3 mit angeformten Stiftchen 6 versehen, die als Lagerstift für die Zahnachsen 11 dienen, und dazu auf eine passende Weise in an den Enden der Zahnachsen 11 versehenen Lagerlöcher 13 reichen können. Jede Kassettehälfte 2 ist mit drei von derartigen Aufnahmeräumen 4 versehen, die abwechselnd versetzt hinsichtlich einander gelegen sind. Die Zahnachsen 11 haben Länge die kürzer ist als die Länge über alles von der Kassette 20, aber mit dem Abstand zwischen der Innenendfläche 50 durch die Stege 5 und die Innenfläche der Endplatte 3 gebildet, übereinstimmt. Auf der Innenfläche 50 sind auch Stiftchen 6 gebildet, die auf passende Weise in Lagerlöcher 13 der Zahnachsen 11 reichen. Die Zahnachsen 11 sind also an beiden Enden auf Drehzapfen gelagert und werden in axiale Richtung eingeschlossen gehalten. Dies kann geschehen durch die Stiftchen 6 mit ihrem Ende den Boden der Löcher 13 berühren zu lassen, aber alternativ durch die doch schon anwesende Endplatte 3 und Innenfläche 50. Die Zahnachsen 11 können hierdurch mit Spiel in den Räumen 4 und innerhalb der Ringe 7 aufgenommen sein.

Die Zahnachsen 11 reichen aus den Aufnahmeräumen 4 radial nach außen, wie in den Figuren 3A und 3B wiedergegeben ist. Da können sie mit von einer Innenverzahnung versehenen Buchsen 15, die an Innenenden der ausgehenden Achsen 21 oder Antriebsachsen für die Räder verschweißt sind, wie in Figur 4 wiedergegeben ist, in Angriff gebracht werden.

In Figur 3A ist zu sehen, daß der Ring 7 einen Umfang hat, der größer ist als der umschriebene Kreis der Zahnachsen 11, der selbst einen größeren Diameter als die Endplatte 3 hat. Also ist radialer Raum für die Buchsen 15 verschafft, so daß die radiale Abmessung des Differentialgetriebes beschränkt gehalten werden kann. Die Buchsen 15 können mit Rändern 51 auf die Ringe 7 in Berührung gebracht werden.

In Figur 3B ist zu sehen, daß die Zahnachsen 11 zumindest mit dem Abschnitt der durch den Aufnahmeraum 4 auswärts reicht, einigermaßen konisch um eine Ecke α stehen.

Bei dem Zusammenbauen der Kassette 20 von Figur 1 stellt man zuerst die sechs Zahnachsen 11 in die eine Kassettehälfte 2, wobei drei Achsen auf der Endplatte 3 stützen und drei Achsen auf der Innenfläche 50 stützen. Darauf nimmt man die zweite Kassettehälfte 2, und stellt die mit Verbindungsstiftchen 9a in Verbindungslöcher 9b, um die beiden Kassettehälften 2 mit den Ringen 7 gegeneinander zu stellen. Dann ist eine Kassette 20 erhalten, die leicht zu handhaben ist, ohne daß diese ungewollt auseinanderfällt.

Bei dem Montieren der Kassette in der Aufstellung von Figur 4 kann man die Kassette einfach von einer Seite in das Rohr 24 schieben, bis der Ring 7 die durch Eindrücke 52 gebildeten Anschläge in dem Rohr 24 berührt. Eventuell kann die Kassette mittels einer durch die Rohrwand reichenden Sicherungsschraube festgelegt werden. Das Rohr 24 ist weiter mit nicht weiter wiedergegebenen Innenerhöhungen versehen, die in Umfangsrichtung passend in auf der Außenoberfläche der Ringe 7 gebildete Rillen 8 eingreifen. Die Verbindung ist hierbei derartig, daß Drehung des Rohrs 24 Drehung der Ringe 7 verursacht, also daß Rohr 24 und Kassette 20 sozusagen drehfest mit einander sind. Alternativ kann die Kassette für Drehung mit dem Rohr mittels von außen durch die Rohrwand reichender Sicherungsschraube festgelegt werden.

Darauf werden von beiden Enden ausgehende Achsen 21, mit darauf mit einer Innenverzahnung versehenen Buchsen 15 geschweißt, zusammen mit Lagern 20a, 22b, und Abstandsbuchsen 23 und Fillringen 26, 27 eingeführt. Das Rohr 24 sorgt hierbei für Stütze an das darauf geschweißte Hinterzahnrad 25, Abschirmung und Stütze für das Differentialgetriebe und Lagerung und Ausrichtung der ausgehenden Achsen. Das Rohr 24 hat hierbei einen so klein wie möglichen Diameter, so daß wenig Raum beansprucht wird.

Alternativ kann das Rohr 24 geteilt sein, und ja derartig daß es von zwei Rohrteilen die Rede ist, die mit Flanschen mit einander verbunden sind, eventuell mit Zwischeneinschließung eines Hinterzahnrads des Kettenantriebs.

Bemerkt wird weiter, daß es auch möglich ist, daß die Endplatte 3 in der Mitte einen Durchgang für ein mit Keilen versehenes Ende einer Steckachse als ausgehende Achse bildet. Es ist dann die Rede von einer Übertragung der radialen Innenseite der Gruppe Zahnachsen 11. Weiter wird bemerkt, daß die Buchsen 15 auch mittels einer Keilverbindung auf den Steckachsen als ausgehende Achse befestigt sein können. Auch eine Sechskantverbindung ist möglich.

Die Endplatten, ganz als Scheibe oder Ring gebildet, sorgen für axiale Einschließung der Zahnachsen, bieten ein Lager für die Zahnachsen die da um ihre eigene Herzlinie drehen können, und ein Mittel für das in Drehung Mitführen der Zahnachsen. An der anderen Seite der Zahnachsen hat das Material der Innenfläche 50 dieselbe Funktion.

Die Figuren 5 und 6 zeigen eine weitere Ausführungsform eines Differentialgetriebes 101 - ohne einen umhüllenden Ring - in beziehungsweise dem zusammengesetzten und auseinandergenommenen Zustand. Das Differentialgetriebe 101 besteht aus sechs Achsen 110 die über ein großes Teil ihrer Länge mit Längszähnen 111 versehen sind und die bei einem Ende ein verjüngtes zahnloses Teil 112 haben. Die beiden Enden der Achsen 110 haben einen kleineren Diameter um in Lagerplatten 114, worin die Achsen 110 drehen können, aufgenommen zu werden. Die verjüngten Teile 112 der Achsen 110 sind abwechselnd auf die eine und auf die andere Lagerplatte 114 gerichtet. Die Lagerplatten 114 bilden ein Alternativ für die Endplatten 3 der Ausführung von Figur 2, aber bilden in diesem Fall ein lockeres Unterteil.

Die Lagerplatten 114 und die Enden der Achsen 110 sind in Buchsen 115 aufgenommen, die eine Innenverzahnung 116 haben. In diesen Buchsen 115 sind die Achsen 110 so weit aufgenommen, daß wenn das verjüngte Ende 112 einer Achse 110 in eine Buchse 115 steckt, der von Längsverzahnung versehene Abschnitt derselben Achse nicht mit der Innenverzahnung 116 dieser Buchse in Angriff kommt. Also kommt die Innenverzahnung 116 einer Buchse 115 immer abwechselnd ja oder nicht in Angriff mit der Längsverzahnung der in diese Buchse steckenden Achsen 110.

Figur 7 zeigt den umhüllenden Ring 120 der um die sechs in einandergreifenden gezahnten Achsen 110 angeordnet wird. Die Innenseite des umhüllenden Ringes 120 ist mit sechs in Längsrichtung laufenden Aussparungen 120a, 120b, 120c, ... versehen. In jeder Aussparung passt genau eine der Achsen 110, wobei die Längszähne 111 die Innenseite des Ringes berühren und da frei entlang drehen können. Der Ring 120 umhüllt also den Umhüllenden der sechs gezahnten Achsen 110 und greift auf die Achsen 110 an, aber ist nicht im Eingriff mit den gezahnten Achsen 110: die können noch frei innerhalb des umhüllenden Ringes 120 drehen.

In Figur 8 ist das Obenstehende schematisch wiedergegeben. Das Differentialgetriebe 111 ist in Seitenansicht wiedergegeben, wobei auch der umhüllende Ring 120 in Seitenansicht sichtbar ist. Zwischen den Buchsen 115 und dem umhüllenden Ring 120 ist zu sehen, daß abwechselnd ein gezahntes Teil und ein verjüngtes Teil der Achsen 110 in eine der Buchsen 115 steckt.

In Figur 8 ist auch zu sehen, daß die Buchsen 115 durch zum Beispiel schweißen mit ausgehenden Achsen 121 verbunden sind, die in Lagern 122a, 122b gelagert sind. Die Lager 122 werden mit Hilfe von Abstandsbuchsen 123 und Füllringen 127 an ihrer Stelle gehalten. Das Ganze ist einem Rohr 124 aufgenommen, derartig daß die Buchsen 115 und die ausgehenden Achsen 121 im Rohr 124 frei drehbar sind, aber der umhüllende Ring 120 und die Lager 122 mit Abstandsbuchsen 123 und Füllringen 127 mit dem Rohr 124 mitdrehen. Um das Rohr 124 ist ein Kettenrad 125 durch zum Beispiel schweißen an dem Rohr 124 befestigt. Um das Kettenrad 125 wird eine Kette (nicht gezeigt) angeordnet, die auf übliche Weise angetrieben wird.

Figur 9 zeigt ein Differentialgetriebe gemäß des Durchschnittes IX-IX aus Figur 8. Sichtbar ist das Kettenrad 125 um das Rohr 124, worin sechs mit Längsverzahnung versehene Achsen 110 angeordnet sind, die durch den umhüllenden Ring 120 mit Aussparungen 120a, 120b ... umhüllt werden. Die sechs Achsen greifen mit ihrer Verzahnung in einander, und drei davon haben an Ort und Stelle des Durchschnittes ein verjüngtes Teil 112, so daß die hohle Buchse 115 an dieser Seite des umhüllenden Ringes 120 nicht auf diese drei Achsen angreifen wird.

Figur 10 zeigt ein Teil des Differentialgetriebes gemäß Figur 9 im größeren Maßstab. In dieser Figur ist deutlich sichtbar, daß der umhüllende Ring 120 eine glatte Innenkontur mit Aussparungen hat, die eng auf die Außenkontur der von Längsverzahnung versehenen Achsen 110 anschließt. Eine Drehung des Ringes 120 wird hiermit an die sechs gezahnten Achsen 110 zusammen durchgegeben, wodurch die Achsen 110 als ein Ganzes drehen können. Gleichzeitig können die Achsen 110 jede um ihre eigene Herzlinie innerhalb des Ringes 120 drehen.

Die Wirkung des ersten Ausführungsbeispiels des Differentialgetriebes 100 gemäß der Erfindung wird hiernach erklärt werden.

Das Differentialgetriebe 100 ist normalerweise zwischen den Hinterrädern des Go-Karts angeordnet. Die Hinterräder sind an den ausgehenden Achsen 121 befestigt. Wenn der Go-Kart auf einem normalen Untergrund geradeaus bewogen wird, werden die Räder und damit die ausgehenden Achsen 121 dieselbe Umfangsschnellheit haben. Die drei Achsen 110 die in die Buchse 115 an der einen ausgehenden Achse 121 eingreifen, werden deshalb nicht hinsichtlich der anderen drei Achsen 110 die in die andere Buchse 115 an der anderen ausgehenden Achse 121 eingreifen, rotieren. Wenn der Go-Kart durch treten fortbewogen wird, wird die Antriebskraft der Kette auf das Kettenrad 125 übertragen werden und darauf auf das Rohr 124 übertragen werden, womit auch der umhüllende Ring 120 in Drehung angetrieben wird. Der umhüllende Ring 120 greift auf das System von sechs Achsen 110 an, das als ein Ganzes rotiert wird und damit via die Buchsen 115 die beiden ausgehenden Achsen 121 und also die Räder antreibt.

Wenn der Go-Kart zum Beispiel eine Kurve machen muß, muß das äußerste Rad eine größere Umfangsschnellheit haben als das innerste Rad, so daß die eine ausgehende Achse eine größere Umfangsschnellheit als die andere ausgehende Achse haben muß. Dies bedeutet daß die Buchsen 115 hinsichtlich einander drehen müssen, und durch dieses Drehen müssen die drei Achsen die in die eine Buchse eingreifen hinsichtlich der drei Achsen die in die andere Buchse 115 eingreifen, drehen. Hierbei müssen die sechs Achsen hinsichtlich einander drehen, was möglich ist dadurch daß die glatte Innenkontur des Ringes 120 diese Drehung ermöglicht.

Wenn das Kettenrad 125 gleichzeitig angetrieben wird, wird das Antriebsmoment durch den Ring 120 gleichzeitig auf das in einander greifende System von sechs Achsen 110 übertragen.

Die Erfindung verschafft hiermit ein Differentialgetriebe mit derselben Wirkung als die bekannten Differentialgetrieben, aber das einfach herzustellen und zu montieren ist und das sehr kompakt gebaut werden kann. Das Differentialgetriebe gemäß der Erfindung hat einen Diameter der kaum größer ist als der einer normalen Hinterachse. Die in einander greifenden verzahnten Achsen 110 des Systems verschaffen einen sehr ruhigen Lauf, und die Reibung der Verzahnung und der Rest des Differentialgetriebes ist auch nach längerer Benutzung gering. Die hohlen Buchsen 115 mit Innenverzahnung 116 verschaffen eine gute Einschließung für die verzahnten Achsen 110, auch wenn die Lagerplatten 114 weggelassen werden. Die Montage des Differentialgetriebes in dem Rohr 124 gibt einen guten Schutz gegen Einflüsse von außen, wie Schmutz.

Figur 11 zeigt eine weitere Ausführungsform des Differentialgetriebes 200 in auseinandergenommenem Zustand, ohne eine umhüllende Buchse. Das Differentialgetriebe besteht aus zwei Achsenpaaren 210, in Figur 11 zwei obersten Achsen die in einander greifen und zwei untersten Achsen die mittels Längszähne 211 in einander greifen. Bei dieser Ausführungsform des Differentialgetriebes 200 sind die Achsen über ihre ganze Länge mit einer Längsverzahnung versehen.

Die Buchsen 215 sind gemäß denjenigen der ersten Ausführungsform, wobei von jedem Achsenpaar 210 eine Achse in die eine Buchse 215 und die andere Achse in Buchse 215 hineinragt. Die aussteckenden Teile der Achsen 210 die in eine Buchse 215 stecken, liegen diagonal hinsichtlich einander.

Figur 12 zeigt eine umhüllende Buchse 230 die um die zwei Achsenpaare 210 angeordnet wird. Die umhüllende Buchse besteht aus zwei identischen Hälften 230a, 230b. In jeder Hälfte ist ein Schlitz 231 für ein Paar in einander greifende Achsen 210 angeordnet. Der Schlitz hat eine glatte Innenkontur, die eng bei dem Umhüllenden des in einander greifenden gezahnten Achsenpaars 210 anschließt, derartig daß die Achsen 210 noch hinsichtlich einander und in dem Schlitz 231 drehen können.

In jedem Schlitz 231 sind zwei Einschlußplatten 232, 233 vorhanden, die an beiden Seiten jeder Hälfte 230a, 230b angeordnet sind, wobei die eine an der einen und die andere an der anderen Ende der Schlitzfläche angeordnet ist. Dies ist deutlich zu sehen in Figur 12, wobei beide Verschlußplatten 232, 233 in der Hälfte 230b gezeichnet sind, Verschlußplatte 232 an der Vorderseite und Verschlußplatte 233 an der Hinterseite.

Figur 13 zeigt die umhüllende Buchse 230 in Vorderansicht. Die vordersten Verschlußplatten 232 sind teilweise gepunktet wiedergegeben, weil sie in der Vorderfläche der Buchse 230 liegen. Die Verschlußplatten 233 liegen bei der Hinterfläche der Buchse 230.

Die Figuren 13A und 13B zeigen die umhüllende Buchse in beziehungsweise einem vertikalen Durchschnitt A-A und einem horizontalen Durchschnitt B-B von Figur 13.

In der Außenseite der umhüllenden Buchse 230 sind zwei Rillen 235 angeordnet. Mit Hilfe von Keilen kann die Buchse dann in das Rohr 24 festgesetzt werden, siehe Figur 8.

Die Wirkung des Differentialgetriebes 200 gemäß der Erfindung ist gleich an der von Differentialgetriebe 100.

Statt sechs Achsen 110 werden jetzt vier Achsen 210 benutzt. Von den sechs Achsen 210 des Differentialgetriebes 100 sind sozusagen zwei weggelassen. Die übriggebliebenen Achsen 210 ragen symmetrisch in die Buchsen 215 hinein. Dadurch daß die übriggebliebenen Achsen 210 paarweise in der umhüllenden Buchse 230 aufgeschlossen sind, werden sie auf ausgezeichnete Weise an ihrer Stelle gehalten, parallel zu den ausgehenden Achsen, so daß es nicht unbedingt notwendig ist die Achsen 210 in den Lagerplatten zu lagern.

Die Verschlußplatten 232, 233 sind angeordnet um zu garantieren, daß die Achsen 210 nicht in Längsrichtung verschieben können, so daß sie nicht unabsichtlich in die falsche Buchse landen. Hierdurch könnte das Differentialgetriebe 200 blockieren.

Das Differentialgetriebe 200 funktioniert in dem Go-Kart auf dieselbe Weise als das Differentialgetriebe 1 und das Differentialgetriebe 100.

Die umhüllende Buchse 230 besteht aus zwei Hälften 230a, 230b, damit die zwei Achsenpaare 210 hinsichlich, zum Beispiel, der Buchsen 215 einzustellen sind.

Der umhüllende Ring 220 und die umhüllende Buchse 230 können aus Stahl oder Kunststoff hergestellt werden.

Andere Ausführungsforme des Differentialgetriebes sind möglich. So ist es bei den ersten zwei Aussführungsformen möglich mehr oder minder Achsen 10 zu benutzen, und wird die Innenkontur des umhüllenden Rings 20 hieran angepaßt werden müssen. Bei der letzten Ausführungsform ist es möglich statt zwei Achsenpaare 210, zum Beispiel drei oder vier Achsenpaare zu benutzen, wobei in der umhüllenden Buchse eine übereinstimmende Anzahl Schlitze vorhanden sein muß. Pro Schlitze können statt zwei Achsen 210 zum Beispiel auch drei oder vier Achsen 210 gestellt werden, wobei die Schlitze derartig gebildet sein müssen, daß die Achsen gut in die Buchsen eingreifen.

Gemäß einer anderen Ausführungsform (nicht gezeigt) werden statt der Buchsen 15 die ausgehenden Achsen 21 selbst an ihren Enden mit Längsverzahnung versehen, so daß sie zwischen die gezahnten Achsen 10, 110 oder 210 gesteckt werden können, um darauf einzugreifen.

Statt der Benutzung eines umhüllenden Ringes oder einer umhüllenden Buchse, ist es auch möglich die Achsen 10, 110 oder 210 an beiden Seiten in einer Lagerplatte zu lagern, und die Lagerplatten mit dem Rohr 24 zu verbinden. Mit Hilfe von den ausgehenden Achsen, wovon die Enden an den Zahnachsen gekoppelt sind, wird dann eine Differentialgetriebewirkung erhalten (diese Ausführung ist nicht gezeigt).

In alle obenstehenden Fällen ist es empfehlenswert um, bei Benutzung von sechs auf einem Kreis liegenden in einander greifenden Achsen 110, wie in Figur 9 gezeigt, die Anzahl Zähne pro Achse ein Vielfache von sechs zu wählen, also zum Beispiel zwölf Zähne pro Achse, damit ein glatter Lauf der Achsen in einander und in den Buchsen 115 erhalten wird. Die Anzahl Zähne in der Buchse 115 muß dann auch ein Vielfache von sechs betragen.

Die Erfindung ist nicht zu den obenumschriebenen Ausführungsbeispielen beschränkt, der Schutzumfang wird durch die nachfolgenden Ansprüche bestimmt.

## Patentansprüche

1. Tretauto oder (Kinder)Go-Kart, oder derartiges kleines Fahrzeug, mit einem Differentialgetriebe, umfassend eine Anzahl mit einander im Zahneingriff befindliche Zahnachsen, die parallel zu einander aufgestellt sind und in zwei Gruppen angeordnet sind, wobei die beiden Gruppen sich im treibenden Angriff mit jeweiligen, zu zwei entgegengestellten Seiten reichenden ausgehenden Achsen, insbesondere Antriebsachsen, befinden, wobei die Zahnachsen in einem Halter gehalten sind, der drehfest mit einem Antriebsteil des Fahrzeugs, wie einem Kettenrad, verbunden ist, wobei die Zahnachsen an ihren Enden frei drehbar, vorzugsweise mittels einer Stiftverbindung an dem Halter gelagert sind.

2. Tretauto gemäß Anspruch 1, wobei das Differentialgetriebe eine gerade Anzahl Zahnachsen umfaßt und eine erste ausgehende Achse mit einer ersten Hälfte der auf einander angreifenden Achsen gekoppelt ist und eine zweite ausgehende Achse mit einer zweiten Hälfte der aufeinander angreifenden Achsen gekoppelt ist.

3. Tretauto gemäß Anspruch 2, wobei die ausgehenden Achsen abwechselnd mit den auf einander angreifenden Zahnachsen gekoppelt sind.

4. Tretauto gemäß Anspruch 1, 2 oder 3, wobei der Halter mit Endplatten versehen ist, die von ersten Stiftverbindungsmitteln, vorzugsweise Stiftchen, für Zusammenarbeit mit komplementären, zweiten Stiftverbindungsmitteln, vorzugsweise Lagerlöchern, an den Zahnachsenenden versehen sind.

5. Tretauto gemäß einem der Ansprüche 1-4, wobei der Halter einen Ring umfaßt der mit Mitteln für drehfeste Verbindung mit dem Antriebsteil versehen ist.

6. Tretauto gemäß Anspruch 5, wobei der Ring drehfest mit den Endplatten verbunden ist.

7. Tretauto gemäß Anspruch 6, wobei die Zahnachsen von der einen Gruppe hinsichtlich der zweiten Gruppe axial verschoben liegen und der Halter an Ort und Stelle des dadurch in axialer Richtung entstandenen Raums ein Verbindungssteg zwischen der an dieser Seite gelegenen Endplatte und dem Ring bildet.

8. Tretauto gemäß Anspruch 7, wobei der Verbindungssteg an seinem von der betreffenden Endplatte abgekehrten Ende eine Fläche bilden, die mit ersten Stiftverbindungsmitteln für Zusammenarbeit mit komplementären, zweiten Stiftverbindungsmitteln an den Zahnachsenenden versehen ist.

9. Tretauto gemäß einem der vorhergehenden Ansprüche, wobei der Halter aus zwei Teilen aufgebaut ist, die mit einander verbunden sind, vorzugsweise mittels einer lösbaren Verbindung, wie zum Beispiel einer Schnappverbindung.

10. Tretauto gemäß Anspruch 9, wobei der Halter an Ort und Stelle des Ringes in zwei identischen Hälften geteilt ist.

11. Tretauto gemäß einem der vorhergehenden Ansprüche, wobei der Halter als eine Kassette mit den Zahnachsen darin eingeschlossen gebildet ist, wobei die Zahnachsen mit ihren Zähnen für Angriff auf eine betreffende Antriebsachse frei liegen.

12. Tretauto gemäß Anspruch 11, wobei der Haiter mit Mitteln für drehfester Verbindung mit dem Antriebsteil versehen ist.

13. Tretauto gemäß einem der vorhergehenden Ansprüche, wobei der Halter in einem Rohrstück aufgenommen ist, worin zugleich ein Lager für zumindest eine der Antriebsachsen vorgesehen ist, vorzugsweise mit zwei axial auf Abstand von einander gelegenen Lagern für die Antriebsachse, vorzugsweise von Lagern für beide Antriebsachsen, versehen ist.

14. Tretauto gemäß einem der vorhergehenden Ansprüche, wobei die Zahnachsen mit ihren Zahnangriffsenden konisch gebildet sind.

15. Differentialhalter umfassend eine Anzahl mit einander im Zahnangriff befindliche Zahnachsen, die parallel zu einander aufgestellt sind und in zwei Gruppen angeordnet sind, wobei die Zahnachsen radial und axial im Halter gehalten sind und an ihren Enden mittels einer frei drehbaren Stiftverbindung an den der angegebenen Art gelagert sind, wobei der Halter als eine Kassette mit den Zahnachsen darin aufgeschlossen gebildet ist, wobei die Zahnachsen mit ihren Zähnen für Angriff auf eine betreffende Antriebsachse frei liegen.

16. Differentialhalter gemäß Anspruch 15, wobei der Halter mit Mitteln für drehfeste Verbindung mit einem angetriebenen Teil eines Antriebs versehen ist.

17. Differentialgetriebe oder ein Teil dafür, wie als Unterteil eines Fahrzeugs wie gemäß einem der Ansprüche 1-14 umschrieben, insbesondere in der Form einer die Zahnachsen einschließenden Kassette.

18. Differentialgetriebe für ein Tretauto oder Go-Kart und dergleichen mehr, umfassend ein System von für Drehung auf einander angreifenden Achsen, die alle parallel zu einander verlaufen, welches Achsensystem mit Hilfe eines das Achsensystem umhüllenden Organs drehbar ist.

19. Differentialgetriebe gemäß Anspruch 18, wobei das umhüllende Organ auf zumindest eine Achse angreift.

20. Differentialgetriebe gemäß Anspruch 18 oder 19, wobei zwei ausgehende Achsen mit dem System auf einander angreifende Achsen gekoppelt sind, welche ausgehende Achsen parallel zu den auf einander angreifenden Achsen laufen, wobei vorzugsweise das System eine gerade Anzahl Achsen umfaßt und eine erste ausgehende Achse mit einer ersten Hälfte der auf einander angreifenden Achsen gekoppelt ist und eine zweite ausgehende Achse mit einer zweiten Hälfte der auf einander angreifenden Achsen gekoppelt ist.

21. Differentialgetriebe gemäß Anspruch 20, wobei die ausgehenden Achsen abwechselnd mit den auf einander angreifenden Achsen gekoppelt sind.

22. Differentialgetriebe gemäß Anspruch 20 oder 21, wobei jede Achse bei einem Ende ein glattes oder verjüngtes Teil umfaßt, das abwechselnd nach links und nach rechts gerichtet ist.

23. Differentialgetriebe gemäß Anspruch 22, wobei die erste Hälte der auf einander angreifenden Achsen mit einem Ende an der ersten Seite des das Achsensystem umhüllenden Organs aussteckt, und die zweite Hälfte der auf einander angreifenden Achsen mit einem Ende an einer zweiten Seite des umhüllenden Organs aussteckt, wobei vorzugsweise das umhüllende Organ bei jeder Zahnachse mit Zurückhaltmitteln für die Zahnachse an der Seite wo die Achse nicht aussteckt versehen ist.

24. Differentialgetriebe gemäß Anspruch 22 oder 23, wobei jede ausgehende Achse mit einer hohlen Buchse verbunden ist, die mit ihrer Innenseite für Drehung auf ein oder mehrere nicht-verjüngte oder aussteckende Enden der auf einander angreifenden Zahnachsen angreift.

25. Differentialgetriebe gemäß Anspruch 22 oder 23, wobei jede ausgehende Achse mit einem Ende zwischen eine der Hälften der angreifenden Zahnachsen steckt und für Drehung auf ein oder mehrere nicht-verjüngte oder aussteckende Enden der auf einander angreifenden Zahnachsen angreift.

26. Differentialgetriebe gemäß einem der vorhergehenden Ansprüche, wobei die Herzlinien der auf einander angreifenden Zahnachsen auf einem Kreis gelegen sind.

27. Differentialgetriebe gemäß Anspruch 26, wobei das umhüllende Organ hauptsächlich ringförmig ist und eine vorzugsweise glatte Innenkontur hat, die hauptsächlich bei dem Umhüllenden der ja oder nicht mit einer Verzahnung versehenen auf einander angreifenden Achsen anschließt.

28. Differentialgetriebe gemäß einem der vorhergehenden Ansprüche, wobei das System auf einander angreifende Achsen aus sechs Achsen besteht und jede Achse auf zwei andere Achsen angreift.

29. Differentialgetriebe gemäß Anspruch 28, wobei die Achsen mit einer Außenlängsverzahnung versehen sind und jede Achse eine Anzahl Zähne hat, die durch sechs teilbar ist.

30. Differentialgetriebe gemäß Anspruch 29, wobei jede Achse zwölf Zähne hat und die hohle Buchse mit Innenverzahnung sechsunddreißig Zähne hat.

31. Differentialgetriebe gemäß einem der vorhergehenden Ansprüche, wobei die Enden der auf einander angreifenden Achsen in einer Lagerplatte gelagert sind.

32. Differentialgetriebe gemäß einem der vorhergehenden Ansprüche, wobei die ausgehenden Achsen in Lagern gelagert sind, wovon der Außendiameter gleich ist an dem Außendiameter des umhüllenden Organs, und die Lager und das umhüllende Organ oder der Halter in einem Rohr aufgenommen sind.

33. Differentialgetriebe gemäß Anspruch 32, wobei ein Kettenrad um das Rohr befestigt ist.

34. Differentialgetriebe für ein Tretauto und dergleichen mehr, umfassend ein System parallel verlaufende, für Drehung auf einander angreifende Achsen, zwei ausgehende Achsen die mit dem Achsensystem gekoppelt sind, ein umhüllendes Organ das auf das Achsensystem angreift, und ein Rohr worin die Achsen und das umhüllende Organ aufgenommen sind und worauf ein Kettenrad befestigt ist, wobei die Drehungsachsen von allen Achsen, das umhüllende Organ und das Rohr mit dem Kettenrad parallel zu einander verlaufen.

35. Differentialgetriebe für ein Tretauto und dergleichen mehr, umfassend ein System von einer gerade Anzahl auf einander eingreifende Zahnräder die alle parallel zu einander verlaufen, welches System mit Hilfe eines das Achsensystem umhüllenden Organs das auf wenigstens ein Zahnrad angreift drehbar ist, wobei eine erste Hälfte der Zahnräder abwechselnd mit einer ersten ausgehenden Achse gekoppelt ist und die zweite Hälfte der Anzahl Zahnräder abwechselnd mit einer zweiten ausgehenden Achse gekoppelt ist.

36. Halter als Hauptunterteil eines Differentialgetriebes für Aufstellung zwischen einem eingehenden Antriebsteil und zwischen zwei nach beiden Seiten reichenden ausgehenden Achsen, wobei der Halter als eine Kassette gebildet ist, mit darin aufgeschlossen die Zahnachsen, wobei die Zahnachsen abwechselnd mit ihren Zähnen für Angriff auf eine betreffende ausgehende Achse frei liegen.
